# FASCICULE DE BREVET EUROPEEN

(11) **EP 1 065 080 B1**
(45) Date de publication et mention de la délivrance du brevet: **05.07.2006**
(21) Numéro de dépôt: 00113531.8
(22) Date de dépôt: 27.06.2000
(51) Int. Cl.: B60H 1/00

(54) **Module de ventilation monobloc optimisé en encombrement et accessibilité**
Gebläseeinheit, optimiert in Grösse und Zugänglichkeit
Ventilation unit optimised in size and accessibility

(30) Priorité: 30.06.1999 FR 9908370
(43) Date de publication de la demande: 03.01.2001
(73) Titulaire: VALEO SYSTEMES THERMIQUES, 78321 Le Mesnil St Denis Cedex (FR)
(72) Inventeur: Vincent, Philippe, 28230 Epernon (FR)

(56) Documents cités:
- US-A- 4 476 773
- US-A- 5 391 112
- US-A- 5 879 230

## Description

L'invention concerne un module de ventilation optimisé en encombrement et accessibilité et s'applique au domaine de la climatisation et du chauffage de l'habitacle des véhicules automobiles.

On entend par ventilation, le brassage et la circulation d'air en vue d'obtenir, par couplage avec des échangeurs thermiques, une aération, un chauffage ou une climatisation de local, tel qu'un habitacle de véhicule.

Les modules de ventilation sont en général disposés sous le tablier de tableau de bord d'un véhicule automobile. Ils comportent une enveloppe moulée ayant au moins une entrée d'admission d'air et une sortie d'échappement d'air vers l'habitacle à chauffer ou à refroidir. L'enveloppe loge, entre l'entrée et la sortie d'air, un pulseur d'air comportant un ensemble appelé Groupe Moto-Ventilateur (en abrégé groupe GMV), un volet d'entrée d'air, et une volute enveloppant le groupe GMV et conduisant l'air, aspiré et pulsé par la turbine, de l'entrée vers la sortie de l'enveloppe.

Le groupe GMV se compose lui-même d'une turbine d'aspiration d'air, d'un moteur électrique d'entraînement de la turbine, et d'un support moteur couplé à une virole servant d'assise à la turbine. L'air entrant est aspiré par la turbine à travers au moins un orifice central pratiqué dans la volute et définie par les bords de la virole. Lorsque le GMV est à double aspiration, deux orifices sont prévus : un orifice supérieur formé au-dessus des ailettes et un orifice inférieur, formé autour du moteur. De tels agencements sont décrits, notamment, dans US-A-5 879 230.

Dans les modules de ventilation pour climatisation/chauffage, il est généralement prévu un volet d'entrée d'air permettant l'admission d'une simple aspiration d'air provenant d'une source extérieure, ou une double aspiration soit à partir d'air extérieur soit d'air recyclé provenant de l'habitacle.

Le volet d'entrée d'air est classiquement disposé au-dessus de la volute. Il est plan et bascule entre deux positions, une position d'ouverture et une position de fermeture pour l'une et/ou l'autre des entrées d'air. Ce volet est dénommé volet papillon ou volet drapeau suivant la position, centrale ou latérale, de son axe de rotation.

Cependant, ce type de volet présente l'inconvénient majeur de mobiliser un espace important dans un environnement où l'encombrement est une donnée critique. De plus, il limite la section de passage d'entrée d'air et n'optimise pas l'orientation des aspirations d'air dans la volute, en particulier en montage à double aspiration.

La présente invention vise à résoudre ces problèmes en proposant de réaliser le module de sorte que le volet présente un axe de rotation sensiblement parallèle à la (aux) turbine(s) d'aspiration.

Plus précisément, l'invention a pour objet un module de ventilation monobloc optimisé en encombrement, accessibilité et circulation d'air, composé d'un boîtier de volute logeant un groupe GMV, d'un volet d'admission d'air dans la turbine et des moyens d'actionnement du volet, le groupe GMV comprenant au moins une turbine entraînée en rotation par un moteur électrique autour d'un axe de rotation central, la volute étant couplée à au moins une entrée et une sortie d'air pratiquées dans un boîtier externe, l'air entrant étant aspiré par la turbine à travers au moins un orifice central pratiqué dans la volute, et dans lequel le volet d'admission d'air s'étend de part et d'autre de la volute et est entraîné en rotation par les moyens d'actionnement autour d'un axe traversant l'espace délimité par le boîtier de la volute parallèlement à l'axe de rotation de la (des) turbine(s).

Selon un mode de réalisation particulier, le volet d'entrée d'air comporte un dôme cylindrique parallèle à l'axe de rotation des turbines, terminé selon cet axe par deux secteurs circulaires qui s'articulent sur cet axe, et deux avancées périphériques parallèles à cet axe venant s'appuyer sur des butées venues de l'enveloppe externe.

Selon des caractéristiques préférées :
- l'actionneur entraîne le volet selon des positions intermédiaires ou extrêmes entre, d'une part, une position libérant l'entrée d'air extérieur et fermant une entrée d'air recyclé et, d'autre part, une position fermant l'entrée d'air extérieur et libérant l'entrée d'air recyclé, les positions intermédiaires permettant de réaliser un recyclage partiel de l'air ;
- les entrées d'air extérieur et d'air recyclé présentent des formes adaptées à celles du volet pour rendre leur fermeture étanche par ce dernier ;
- l'axe de rotation du volet traverse l'orifice de volute, en particulier il est confondu avec l'axe de rotation de la turbine ;
- l'actionneur d'entraînement du volet comporte un pignon couplé à un micromoteur, le pignon et le micromoteur étant montés de manière centrale par rapport au volet ; cet entraînement central évite la création de torsion du volet sur le pignon, ce qui augmente la fiabilité et l'étanchéité du montage ;
- l'actionneur d'entraînement comprend également un galet de guidage pour éviter toute sortie du volet hors du pignon d'entraînement.

Selon des modes de réalisation particuliers, les formes du volet et du boîtier sont adaptées pour permettre la mise en oeuvre de mouvements libérant un espace de sortie utile au démontage/montage du GMV. Selon des caractéristiques avantageuses :
- le boîtier et le volet présentent une forme tronconique dans une partie dite supérieure, opposée à l'espace de sortie du GMV, et une partie inférieure cylindrique du côté de l'espace de sortie, les deux parties du boîtier étant détachables l'une de l'autre par de moyens libérables ;
- le module étant à double aspiration, le boîtier présentant des parties détachables, en particulier deux demi-boîtiers, et la volute et le volet présentant des flancs latéraux, les dimensions de l'orifice de passage d'air du fond de la volute, la différence de cotes entre les flancs de volute et du volet, et la différence de cotes entre la jonction des deux demi-boîtiers située à l'opposé du volet et le fond du volet une fois la partie inférieure du boîtier retirée et le volet translaté selon son axe confondu avec l'axe de la turbine, sont réglées pour dégager un espace de sortie utile au démontage/montage du GMV ;
- la jonction entre les deux parties du boîtier située à l'opposé du volet est réglée juste au-dessus de la volute pour permettre le retrait par translation du GMV à travers l'espace de sortie créé après retrait de la partie de boîtier inférieure ;
- une forme particulière du dôme en creux, présentant un décrochement ou un renfoncement parallèle à l'axe de rotation de la turbine, et/ou un décalage des portées d'amplitude du volet, et/ou une avancée de boîtier, créent un espace de démontage par rotation du volet autour d'un axe parallèle à l'axe de rotation de la turbine disposée près d'une butée de portée ;
- le volet est réalisé en deux parties détachables, une partie supérieure pouvant être conique, disposée à l'opposé de l'espace de sortie, et une partie inférieure du côté de l'espace de sortie, la partie inférieure étant détachée pour libérer l'espace utile au démontage du GMV.

L'invention s'applique aussi bien aux véhicules légers qu'aux véhicules de type poids lourd. Dans ce dernier cas, il est avantageux de prévoir le démontage du groupe GMV à partir du compartiment moteur après basculement de la cabine de conduite. Le module de ventilation comporte une platine fixe, qui s'accoste sur une ouverture du compartiment moteur, un volet du type précédent, des moyens supports de volet en rotation, un moyen d'entraînement électrique du volet, un boîtier démontable de volute et un groupe GMV.

Les fonctions essentielles de la ventilation sont ainsi rassemblées sur un même module indépendant et démontable dont les réglages sont conservés, ce qui facilite la maintenance et la fiabilité. Le groupe GMV forme un sous-ensemble monté dans le module par des moyens libérables, indépendamment des autres pièces, par exemple par un collier de fixation.

Selon des modes de réalisation particuliers, le moyen d'entraînement électrique est un micromoteur disposé en partie centrale sur le boîtier démontable d'une double volute logeant symétriquement deux turbines. Ce montage central permet d'éviter les torsions du volet et les moyens additionnels de rigidification habituellement utilisés.

Ce micromoteur peut avantageusement entraîner le volet à l'aide d'une transmission par pignon, le pignon pouvant être prolongé par un galet guidé dans une rainure, et le groupe GMV est de préférence fixé par un collier amovible autour de l'anneau moteur vissé sur le boîtier de volute.

D'autres caractéristiques et avantages de l'invention apparaîtront à la lecture de la description qui suit relative à des exemples de réalisation, en référence aux figures annexées qui représentent respectivement :
- la figure 1, une vue globale en perspective d'un module de ventilation selon l'invention ;
- les figures 2a à 2d, des vues schématiques en coupe d'un exemple de réalisation du module qui facilite le démontage du groupe GMV ;
- les figures 3a et 3b, des coupes schématiques d'un autre exemple de réalisation facilitant ce même démontage ;
- les figures 4a et 4b, des coupes schématiques illustrant un autre exemple de réalisation ;
- les figures 5a à 5c, des coupes schématiques de formes particulières de volets ;
- les figures 6a à 6c, des coupes schématiques d'un exemple de volets en deux parties ; et
- les figures 7a et 7b, des vues schématiques d'un exemple de module destiné plus particulièrement à un véhicule poids lourd, respectivement selon une coupe latérale et la coupe suivant VII-VII de la figure 7a.

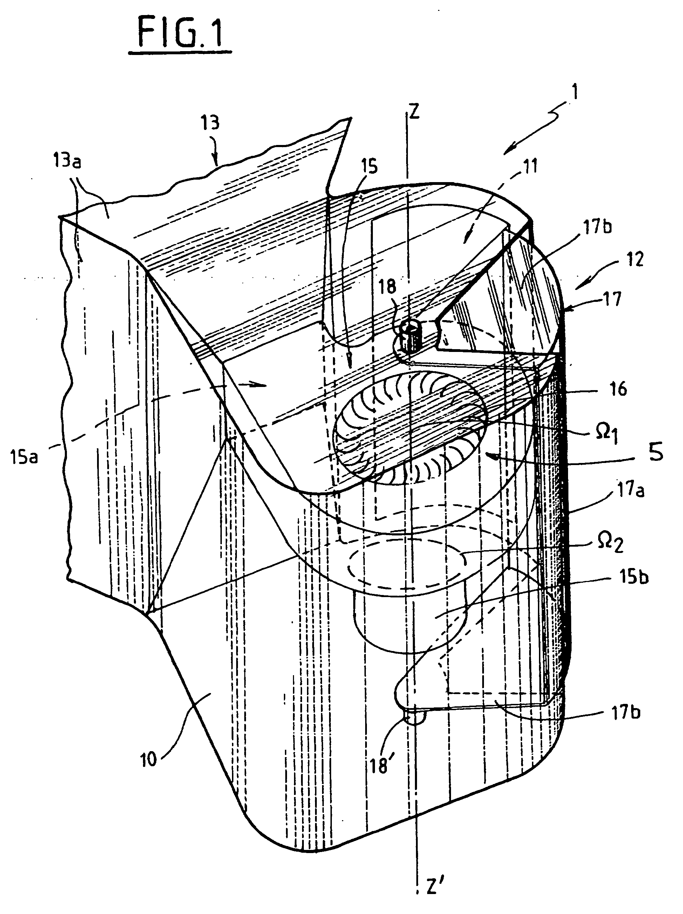

La figure 1 représente une vue globale en perspective d'un module 1 de ventilation de climatisation/chauffage selon l'invention, destiné à un habitacle de véhicule automobile. Ce module se présente sous la forme d'une enveloppe moulée 10 dans laquelle sont découpées deux entrées d'air 11 et 12, respectivement d'air extérieur et d'air de recyclage de l'habitacle du véhicule, ainsi qu'une sortie d'air 13, bordée par des parois latérales 13a.

Dans l'enveloppe 10 est fixée, par vissage ou par tout moyen connu, une volute moulée 15 dont le conduit de sortie 15a est couplé à la sortie d'air 13. La volute 15 loge un groupe GMV 5 à double aspiration, formé de la turbine d'aspiration d'air à ailettes 16, de son moteur d'entraînement et du support moteur (non représentés). En particulier un prolongement cylindrique 15b de la volute loge le moteur d'entraînement. Les éléments disposés à l'intérieur de l'enveloppe apparaissent par transparence sur la figure.

De part et d'autre de la volute 15, est disposé un volet 17 comportant un dôme cylindrique 17a flanqué de deux secteurs circulaires 17b, dont les centres sont montés en rotation sur l'axe Z'Z de la turbine 16 par des arbres 18 et 18'.

D'autres éléments connus, qui relèvent de la compétence de l'homme de l'art, comme les câbles et les fiches d'alimentation du moteur de turbine, ne sont pas représentés afin d'alléger la figure.

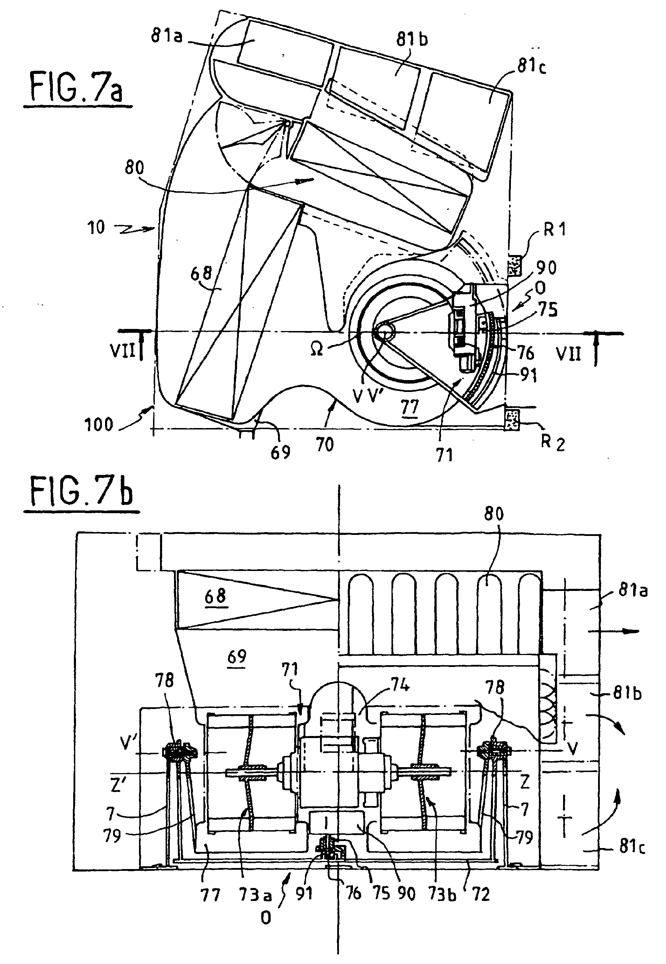

En fonctionnement, l'air aspiré par la turbine 16, à travers les orifices Ω1 et Ω2 de la volute, provient de l'une ou l'autre des entrées d'air 11 et 12, selon la position du volet 17. Ce volet pivote, dans cet exemple de réalisation, autour de l'axe de la turbine Z'Z. Il est entraîné en rotation par un actionneur dont un exemple de réalisation sera décrit plus loin en référence aux figures 7a et 7b, et pivote ainsi entre deux positions extrêmes définissant en amplitude la portée du volet. L'air pulsé est ensuite évacué vers des échangeurs thermiques par la sortie 13.

Le module 1 est installé sous le tablier du tableau de bord du véhicule. Le groupe GMV 5 forme un sous-ensemble démontable à partir de l'habitacle ou du bloc moteur, suivant des formes de réalisation particulières.

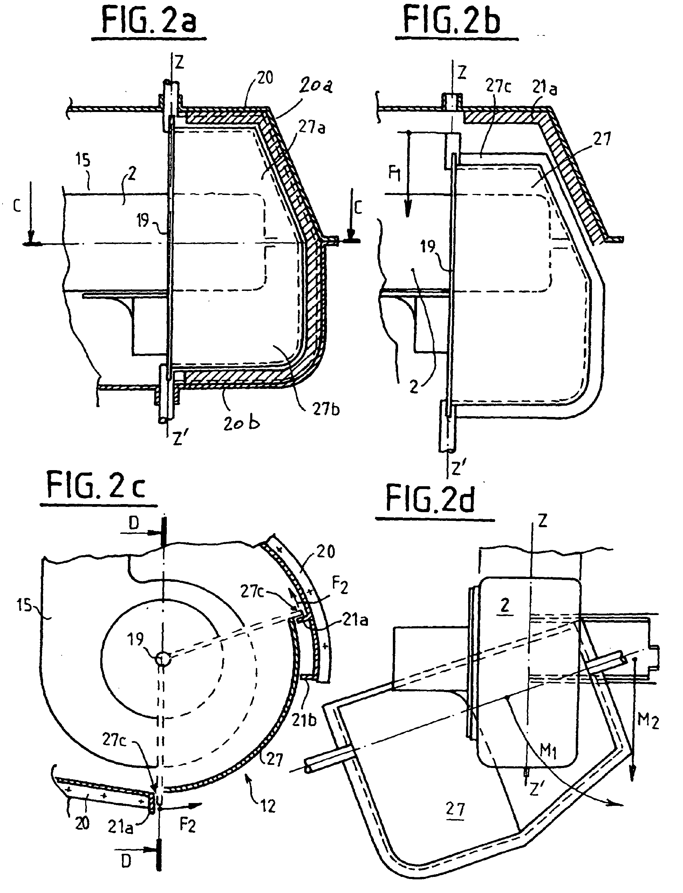

Les figures 2a à 2d illustrent schématiquement en coupe un premier exemple de mise en oeuvre facilitant l'accès du GMV par l'habitacle.

Sur les coupes partiellement arrachées des figures 2a et 2b selon un plan passant par l'axe Z'Z, il apparaît que le volet d'entrée d'air 27, pivotant autour d'un arbre central 19 d'axe Z'Z, présente dans une partie dite supérieure une forme tronconique 27a, alors que dans sa partie inférieure 27b, le volet conserve une forme cylindrique. Les qualifications dites « supérieure » ou « inférieure » des éléments visés renvoient à leur position par rapport à l'espace de sortie du GMV, respectivement du côté opposé ou du côté de cet espace.

L'enveloppe 20 se compose de deux parties séparables qui épousent la forme du volet, une demi-boîtier supérieur tronconique 20a et un demi-boîtier inférieur cylindrique 20b. La partie inférieure est retirée lors du démontage, plus particulièrement illustré à la figure 2b. La liaison entre les deux demi-boîtiers 20a et 20b est réalisée par tout moyen connu, par exemple par clipsage ou vissage.

Le dégagement du volet 27 est réalisé par translation suivant la flèche F1, parallèlement à l'axe Z'Z, après avoir retiré le demi-boîtier inférieur 20b.

Plus particulièrement en référence à la figure 2b, il apparaît la présence d'une paroi latérale 27c en bordure du volet 27 ainsi qu'une butée 21a sur laquelle s'appuie cette paroi 27c afin d'obtenir une bonne étanchéité d'entrée d'air dans le module de ventilation.

Sur la coupe CC indiquée sur la figure 2a et qui est représentée sur la figure 2c, apparaissent plus précisément les parois 27c qui s'appuient sur les butées 21a ou 2lb suivant que le volet ferme l'entrée d'air recyclé provenant de l'ouverture 12, comme représenté, ou l'entrée d'air extérieure 11 lorsqu'il est entraîné en pivotement suivant les flèches F2 pour ouvrir l'entrée d'air recyclé 12.

Sur la figure 2d, qui représente la vue en coupe du module selon la trace DD indiquée à la figure 2c, sont indiqués les mouvements de dégagements M1 et M2 du volet 27. Le mouvement M1 est un mouvement en rotation qui suit le mouvement en translation matérialisé par la flèche F1 (figure 2b) . Le mouvement M2 est un mouvement en translation parallèlement à l'axe Z'Z. Les mouvements M1 et M2 peuvent être successifs ou simultanés.

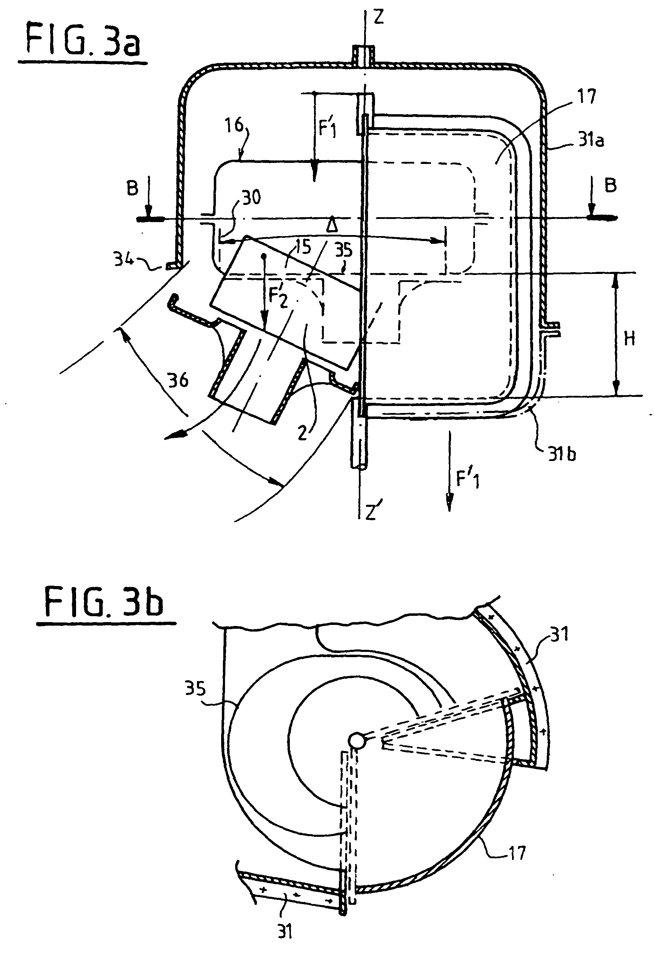

Un autre exemple de réalisation est illustré en coupe sur les figures 3a et 3b, respectivement selon un plan passant par l'axe Z'Z et selon la trace BB (figure 3a) . Le démontage du GMV 5 est alors obtenu par le choix de dimensionnement entre l'orifice d'aspiration 35 défini dans le fond de la volute, et le décalage H selon l'axe Z'Z entre le fond de la volute 15 et le fond du volet 17, positionné après une translation selon la flèche F1 le long de l'axe Z'Z au niveau de la partie inférieure 31b du boîtier. Ce choix conditionne directement la démontabilité du groupe GMV.

Ainsi, dans cet exemple de réalisation, la jonction 34 entre la partie supérieure 31a et inférieure 31b du boîtier est située, du côté opposé au volet 17, à une hauteur approximativement égale à celle du fond de la volute 15. Dans ces conditions, après retrait de la partie inférieure 31b du boîtier et translation du volet selon l'axe Z'Z (flèche F'1), le groupe GMV 5 est dégagé dans l'espace de passage 36 formé entre la partie de jonction 34 et le volet 17 (flèches F'2).

Sur la figure 3b, apparaît plus précisément l'orifice 35 de passage dans le fond de volute. Bien entendu, le groupe GMV 5 n'est dégagé qu'après retrait de la partie inférieure de la volute 15.

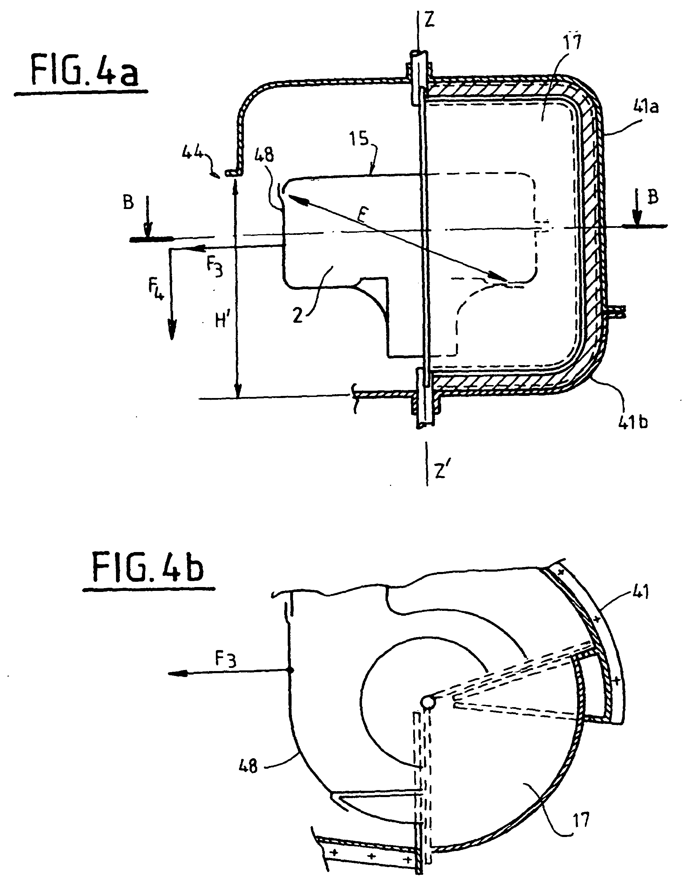

En référence aux figures 4a et 4b, un autre exemple de réalisation du module selon l'invention est représenté, la figure 4a étant une vue en coupe selon l'axe Z'Z et la figure 4b une vue en coupe selon la trace BB de la figure 4a. Dans cet exemple, la jonction 44 entre les demi-boîtiers 41a et 41b du module de l'invention, située du côté opposé au volet d'entrée d'air 17, est disposée juste au-dessus de la partie supérieure de la volute 15. De cette façon, le groupe GMV peut être retiré par translation selon la flèche F3 de la partie de boîtier de volute 48 d'encombrement transversal E. La translation est effectuée perpendiculairement à l'axe Z'Z, à travers l'espace de passage de hauteur H'. Le démontage du groupe GMV 5 est obtenu par translation selon la flèche F3 puis, suivant l'environnement, selon la flèche F4, respectivement perpendiculaire et parallèle à l'axe Z'Z, après avoir retiré le demi-boîtier inférieur 41b ou seulement une partie de celui-ci.

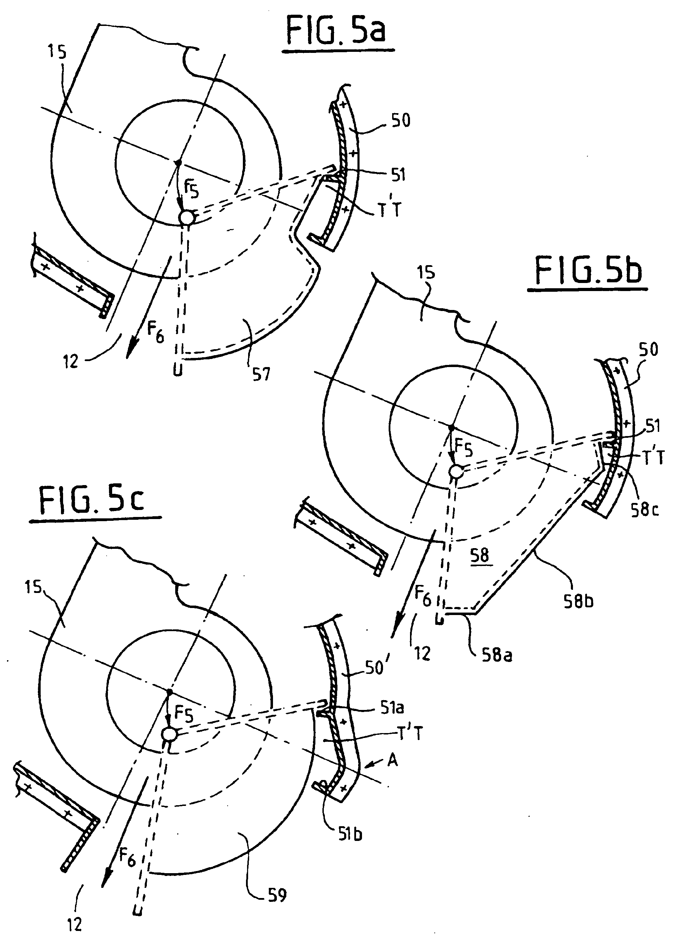

Il est également possible de démonter le groupe GMV en dégageant le volet d'entrée d'air par une rotation adaptée autour d'un axe situé près de la paroi de boîtier du module selon l'invention. Sur les vues en coupe des figures 5a à 5c, selon un plan perpendiculaire à l'axe Z'Z, trois exemples de volets de forme adaptée à une telle rotation sont illustrés.

En référence à ces trois figures, le volet d'entrée d'air, référencé respectivement 57, 58 et 59, est déplacé en rotation suivant la flèche F5, selon un axe T'-T situé près de la butée d'étanchéité 51 du boîtier 50, le volet étant ensuite libéré à travers une entrée d'air 12 par translation suivant la flèche F6. Ce dégagement n'est possible qu'après avoir enlevé la partie inférieure du boîtier 50, en partie ou en totalité selon l'environnement, et translaté le volet selon son axe Z'Z en direction de cette partie inférieure. Le groupe GMV peut alors, après dégagement du volet, être libéré par translation suivant son axe Z'Z.

Afin de permettre ces différents mouvements, le dôme du volet d'entrée d'air 57 ou 58, représenté aux figures 5a et 5b, présente une forme adaptée, respectivement par déformation locale formant un creux ou sous une forme prismatique à faces planes 58a à 58c. En variante, ces faces peuvent être au moins partiellement concaves afin de présenter un renfoncement.

Dans la variante présente en figure 5c, les portées du volet 59 sont décalées, afin de conserver un volet à dôme cylindrique. Ceci se traduit par une forme du boîtier 50' présentant une avancée A entre les butées 51a et 5lb définissant lesdites portées.

Selon un autre exemple de réalisation, toujours adapté à un démontage du GMV à partir de l'habitacle du véhicule, le volet d'entrée d'air est formé de deux parties, une partie dite supérieure et une partie dite inférieure, la partie inférieure étant amovible pour libérer l'espace de démontage GMV.

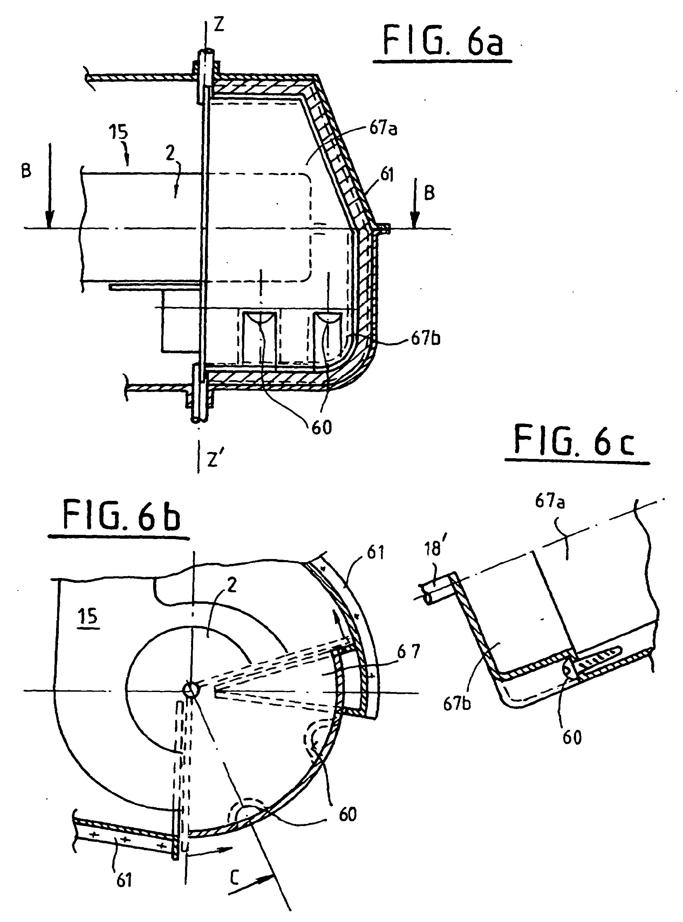

En référence aux figures 6a à 6c, respectivement en coupe selon un plan contenant l'axe Z'Z, en coupe selon le plan DD de la figure 6a et selon le demi-plan C de la figure 6b, le volet d'entrée d'air 67 se présente en deux parties, une partie supérieure 67a et une partie inférieure 67b, la partie 67a étant partiellement tronconique dans cet exemple de réalisation non limitatif.

Les parties 67a et 67b sont fixées par des vis 60 dans l'exemple illustré. Tout autre moyen de fixation connu (clip, crochet, collier, etc...) peut également être utilisé.

Afin de libérer d'espace de démontage du GMV, il est procédé aux opérations suivantes :
- démontage du boîtier d'entrée d'air inférieur 61b ;
- démontage de la partie inférieure de volet d'entrée d'air 67b ; et
- démontage du GMV 5 selon un mouvement de translation suivant son axe Z'Z.

Par ailleurs, le volet est classiquement entraîné par des moyens électriques. Afin d'éviter une déformation du volet par torsion lors de son déplacement, il convient de prévoir un montage central de l'actionneur d'entraînement comprenant un micromoteur 90 entraînant un pignon 75, comme dans l'exemple de réalisation illustré en référence aux figures 7a et 7b.

Ces figures représentent respectivement une vue en coupe latérale selon un plan perpendiculaire à l'axe Z'Z, et une vue en coupe selon VII-VII de la figure 7a, d'un ensemble de climatisation/chauffage implanté dans un véhicule poids lourd. Cet ensemble intègre un évaporateur 68, un condenseur 69 et un module de ventilation 70 selon l'invention. Le groupe GMV 71 de ce module est rendu accessible à partir du compartiment moteur du véhicule par une platine 7 après basculement de la cabine de conduite du véhicule.

Le module de ventilation monobloc est fixé sur la platine 7 qui s'accoste sur une ouverture O pratiquée dans la structure 100 du véhicule et limitée par les barres de renfort R1 et R2. Le module monobloc démontable comprend la platine 7, un volet 72, des moyens d'actionnement du volet, un boîtier de volute formée d'une virole 77 logeant un groupe GMV et des bras supports 79 du boîtier, la platine supportant le volet et les bras. La volute est fermée par un capot qui vient s'articuler sur le boîtier 77 par un joint étanche. Ce capot peut être recentré si nécessaire à partir de l'axe de la platine.

Dans cet exemple de réalisation, les moyens d'actionnement comprennent un micromoteur d'entraînement 90 fixé au boîtier de volute et le groupe GMV comporte deux turbines 73a et 73b, le groupe étant fixé par un collier amovible 74 autour de l'anneau moteur vissé sur la virole 77.

Le micromoteur 90 est disposé en partie centrale sur la virole 77 de la volute logeant symétriquement les deux turbines 73a et 73b. Ce micromoteur 90 entraîne le volet 72 à l'aide d'une transmission par pignon 75, le pignon étant prolongé par un galet 76 guidé dans une rainure 91, formée de moulage dans le volet 72. Ce galet permet d'éviter toute sortie du volet 72 hors du pignon d'entraînement central 75.

Le volet 72 est monté en rotation autour d'un axe V'V, situé dans l'orifice d'aspiration Ω de la volute parallèlement à l'axe Z'Z des turbines. Les arbres de rotation 78 du volet 72 et les bras supports 79 de la virole 77 sont montés sur les axes de la platine 7.

Un mélangeur d'air chaud/froid à chicanes alternées 80, de dimensions 1,5 fois supérieures aux dispositifs de mélange habituels, est utilisé en sortie. Divers canaux 81a à 81c sont prévues afin de pulser l'air pour différentes orientations indiquées selon les flèches : niveau inférieur, et dégivrage pare-brise, ventilation.

L'invention n'est pas limitée aux exemples de réalisation décrits et représentés. Par exemple, la forme conique du boîtier de ventilation et du volet peut s'appliquer pour faciliter le démontage du GMV dans les autres exemples de réalisation. Par ailleurs, des positions intermédiaires du volet peuvent être prévues entre les positions extrêmes.

## Revendications

1. Module de ventilation monobloc optimisé en encombrement, accessibilité, et circulation d'air,
comprenant une enveloppe externe (10) comportant au moins une entrée d'air (11, 12) et une sortie d'air (13),
une volute (15, 48, 77) couplée à l'entrée d'air (11, 12) et à la sortie d'air (13) et fixée dans l'enveloppe externe (10), la volute (15, 48, 77) comprenant au moins un orifice central (Ù1, Ù2) d'aspiration d'air provenant de l'entrée d'air (11, 12),
un volet d'admission d'air pour l'entrée d'air (11, 12) de l'enveloppe externe, et des moyens d'actionnement (75, 79, 79', 90) du volet d'admission d'air (17, 27, 57-59, 72), **caractérisé en ce que** la volute loge un groupe GMV (2) formé d'au moins une turbine (16, 73a, 73b) et d'un moteur électrique entraînant en rotation la turbine (16, 73a, 73b) autour d'un axe de rotation central (ZZ'), et **en ce que** le volet d'admission d'air (17, 27, 57 à 59, 72) s'étend de part et d'autre de la volute (15) selon l'axe (Z'Z) et est entraîné en rotation par les moyens d'actionnement (75, 79, 79', 90) autour d'un axe (V'V) passant par l'orifice central (Ω1, Ω2) d'aspiration parallèlement à l'axe (Z'Z) de rotation de la turbine (73a, 73b).

2. Module de ventilation selon la revendication 1, dans lequel le volet d'entrée d'air (17) comporte un dôme cylindrique (17a) parallèle à l'axe de rotation (Z'Z) des turbines, terminé selon cet axe par deux secteurs circulaires (17b) qui s'articulent sur cet axe, et deux avancées périphériques (27c) parallèles à cet axe venant s'appuyer sur des butées (21a, 21b) venues de l'enveloppe externe.

3. Module de ventilation selon l'une des revendications 1 et 2, dans lequel l'enveloppe externe comporte une entrée d'air extérieur (11) et une entrée d'air recyclé (12), l'actionneur entraînant le volet (17) entre, d'une part, une position libérant l'entrée d'air extérieur (11) et fermant l'entrée d'air recyclé (12) et, d'autre part, une position fermant l'entrée d'air extérieur et libérant l'entrée d'air recyclé.

4. Module de ventilation selon la revendication 3, dans lequel les entrées d'air extérieur et d'air recyclé présentent des formes adaptées à celles du volet pour rendre leur fermeture étanche par ce dernier, l'axe de rotation (V'V) du volet traversant la (les) orifices (Ω1, Ω2) de la volute (15).

5. Module de ventilation selon la revendication 4, dans lequel le boîtier (20) et le volet (27) présentent une forme tronconique dans une partie dite supérieure, opposée à l'espace de sortie du GMV, et une partie inférieure cylindrique du côté de l'espace de sortie, les deux parties du boîtier étant détachables l'une de l'autre par de moyens libérables.

6. Module de ventilation selon la revendication 5, dans lequel le boîtier présentant des parties détachables (31a, 31b), la volute et le volet des flancs latéraux (30), les dimensions de l'orifice central (35) de passage du fond de la volute, la différence (H) de cotes entre les flancs de volute et du volet, et la différence de cotes entre la jonction (34) des deux parties du boîtier située à l'opposé du volet (17) et le fond du volet une fois la partie inférieure du boîtier retirée et le volet translaté selon son axe confondu avec l'axe (Z'Z) de la turbine, sont réglées pour dégager un espace de sortie utile (36) au démontage/montage du GMV.

7. Module de ventilation selon la revendication 6, dans lequel la jonction (44) entre les deux parties (41a, 41b) du boîtier située à l'opposé du volet (17) est réglée juste au-dessus de la volute pour permettre le retrait par translation (F3, F4) de la partie de volute (48) et du GMV à travers l'orifice (H') créé après retrait de la partie de boîtier inférieure (41b).

8. Module de ventilation selon la revendication 4, dans lequel une forme en creux du dôme du volet (57) et/ou une avancée (A) de boîtier (50') créant des portées d'amplitude du volet (59) et/ou une forme prismatique du volet (58), créent un espace de démontage par rotation du volet autour d'un axe parallèle (T'T) à l'axe de rotation de la turbine disposées près d'une butée (51) de portée.

9. Module de ventilation selon la revendication 4, dans lequel le volet est réalisé en deux parties détachables (67a, 67b), une partie supérieure au moins partiellement conique, disposée à l'opposé de l'espace de sortie, et une partie inférieure du côté de l'espace de sortie, la partie inférieure étant détachée pour libérer l'espace utile au démontage du GMV.

10. Module de ventilation selon l'une quelconque des revendications 1 à 4, dans lequel une platine (7), qui s'accoste sur une ouverture (O) pratiquée dans la structure (100) du véhicule, est prévue pour monter le boîtier de la volute (77) logeant le groupe GMV (71) et le volet (72).

11. Module de ventilation selon la revendication 10, dans lequel le boîtier de volute (77) est monté par bras supports (79), le groupe GMV (71) est fixé par un collier amovible (74) au boîtier de volute (77) et le volet est monté par des arbres de rotation (78).

12. Module de ventilation selon la revendication 11, dans lequel les moyens d'actionnement comprennent un micromoteur d'entraînement (90) fixé de manière centrale sur le boîtier de volute (77) qui loge symétriquement deux turbines (73a, 73b).

13. Module de ventilation selon la revendication 12, dans lequel le micromoteur (90) entraîne le volet (72) à l'aide d'une transmission centrale par un pignon (75) prolongé par un galet (76) guidé dans une rainure (91) formée dans le volet (72).

## Claims

1. One-piece ventilation module optimised for space, accessibility, and air circulation,
comprising an external shell (10) including at least one air inlet (11, 12) and one air bypass (13),
one blower housing (15, 48, 77) connected to the air inlet (11, 12) and to the air bypass (13) and fixed in the external shell (10), the blower housing (15, 48, 77)
comprising at least one central suction orifice (Ω1, Ω2) of air coming from the air inlet (11, 12),
one air inlet flap for the air inlet (11, 12) of the external shell, and
driving means (75, 79, 79', 90) of the air inlet flap (17, 27, 57-59, 72),
**characterised in that** the blower housing houses an engine blower (2) formed of at least one turbine (16, 73a, 73b) and one electric motor driving the turbine (16, 73a, 73b) in revolution around a central axis of rotation (ZZ'),
**in that** the air inlet flap (17, 27, 57 to 59, 72) extends on each side of the blower housing (15) along the axis (Z'Z) and is driven in revolution by the driving means (75, 79, 79', 90) around an axis (V'V) passing through the central suction orifice (Ω1, Ω2) parallel to the axis (Z'Z) of rotation of the turbine (73a, 73b).

2. Ventilation module according to claim 1, wherein the air inlet flap (17) comprises a cylindrical dome (17a) parallel to the axis of rotation (Z'Z) of the turbines, terminated along this axis by two circular sectors (17b) which are articulated around this axis, and two peripheral advances (27c) parallel to this axis coming to press against thrust bearings (21a, 21b) coming from the external shell.

3. Ventilation module according to any of claims 1 and 2, wherein the external shell comprises an external air inlet (11) and a recirculated air inlet (12), the driver driving the flap (17) between, on the one hand, a position that releases the external air inlet (11) and closes the recirculated air inlet (12) and, on the other hand, a position that closes the external air inlet and releases the recirculated air inlet.

4. Ventilation module according to claim 3, wherein the external and recirculated air inlets have shapes adapted to those of the flap in order to make a seal when closed by the latter, the axis of rotation (V'V) of the flap crossing the orifice(s) (Ω1, Ω2) of the blower housing (15).

5. Ventilation module according to claim 4, in which the housing (20) and flap (27) have a tapered shape in a part referred to as upper, opposite from the engine blower output area, and a lower cylindrical part next to the output area, with both parts of the housing able to be separated from one another through a means of release.

6. Ventilation module according to claim 5, wherein the housing having detachable parts (31a, 31b), the blower housing and the flap of the lateral sides (30), the dimensions of the central flow-through orifice (35) at the bottom of the blower housing, the difference (H) in dimension between the sides of the blower housing and of the flap, and the difference in dimension between the junction (34) of the two parts of the housing located opposite the flap (17) and the bottom of the flap once the lower part of the housing has been removed and the flap translated along its axis combined with the axis (Z'Z) of the turbine, are adjusted in order to clear an output area useful (36) for dismounting/mounting the engine blowers.

7. Ventilation module according to claim 6, wherein the junction (44) between the two parts (41a, 41b) of the housing located opposite the flap (17) is adjusted just above the blower housing in order to allow for withdrawal via translation (F3, F4) of the part of the blower housing (48) and of the engine blowers through the orifice (H') created after the withdrawal of the part of the lower housing (41b).

8. Ventilation module according to claim 4, wherein a hollow shape of the dome of the flap (57) and/or an advance (A) of housing (50') creating amplitude seatings of the flap (59) and/or a prismatic shape of the flap (58), creating a dismounting area by rotation of the flap around an axis parallel (T'T) to the axis of rotation of the turbine placed near a thrust bearing (51) seating.

9. Ventilation module according to claim 4, wherein the flap is produced in two removable parts (67a, 67b), an upper part which is at least partially tapered, placed opposite the output area, and a lower part next to the output area, with the lower part being detached in order to make room for dismounting the engine blowers.

10. Ventilation module as claimed in any of claims 1 to 4, wherein a mounting plate (7), which comes alongside an opening (O) made in the structure (100) of the vehicle, is provided to mount the housing of the blower housing (77) housing the engine blower (71) and the flap (72).

11. Ventilation module according to claim 10, wherein the housing of the blower housing (77) is mounted by supporting arms (79), the engine blower (71) is fixed by a removable clamp (74) to the housing of the blower housing (77) and the flap is mounted by rotating shafts (78).

12. Ventilation module according to claim 11, wherein the driving means comprise a drive micromotor (90) fixed centrally on the housing of the blower housing (77) which symmetrically houses two turbines (73a, 73b).

13. Ventilation module according to claim 12, wherein the micromotor (90) drives the flap (72) using a central transmission via a pinion (75) extended by a roller (76) guided in a groove (91) formed in the flap (72).

## Patentansprüche

1. Monoblock-Ventilationsmodul, optimiert in seinen Gesamtabmessungen, seiner Zugänglichkeit und der Luftzirkulation,
bestehend aus einer äußeren Gehäusehülle (10) mit mindestens einem Lufteintritt (11,12) und einem Luftaustritt (13),
einem Spiralgehäuse (15,48,77), das mit dem Lufteintritt (11,12) und dem Luftaustritt (13) verbunden ist und in der äußeren Gehäusehülle (10) befestigt ist, wobei das Spiralgehäuse (15,48,77) mindestens eine zentrale Luftansaugöffnung (Ω1,Ω2) für die aus dem Lufteintritt (11,12) kommende Luft aufweist,
einer Lufteinlassklappe für den Lufteintritt (11,12) aus der äußeren Gehäusehülle und
den Betätigungsmitteln (75,79,79',90) der Lufteinlassklappe (17,27,57-59,72)
**dadurch gekennzeichnet, dass** das Spiralgehäuse eine MV-Gruppe (2) aufnimmt, die aus mindestens einem Luftgebläse (16,73a,73b) und einem elektrischen Motor gebildet wird, der den Drehantrieb des Luftgebläses (16,73a,73b) um die Hauptdrehachse (ZZ') bildet,
dadurch dass die Lufteinlassklappe (17,27,57 bis 59,72) sich beidseitig des Spiralgehäuses (15) entlang der Achse (Z'Z) erstreckt und durch die Betätigungsmittel (75,79,79',90) um die Achse (V'V) in Drehbewegung gesetzt wird und durch die zentrale Luftansaugöffnung (Ω1,Ω2) parallel zu der Drehachse (Z'Z) des Luftgebläses (73a,73b) hindurchführt.

2. Ventilationsmodul nach Anspruch 1, wobei die Lufteinlassklappe (17) eine zylindrische Wölbung (17a) parallel zu der Rotationsachse (Z'Z) der Luftgebläse aufweist, die jeweils am Ende dieser Achse einen Kreisausschnitt (17b) zeigen, die auf dieser Achse gelenkig gelagert sind und zwei periphere Vorsprünge (27c) parallel zu dieser Achse, die sich auf die aus der äußeren Gehäusehülle gekommenen Anschläge (21a,21b) stützen.

3. Ventilationsmodul nach einem der Ansprüche 1 und 2, wobei die äußere Gehäusehülle einen Außenlufteintritt (11) aufweist und einen Umlufteintritt (12), der Stellantrieb die Klappe (17) einstellt zwischen, einerseits einer Position, die den Außenlufteintritt (11) freigibt und den Umlufteintritt (12) schließt und andererseits einer Position, die den Außenlufteintritt schließt und den Umlufteintritt freigibt.

4. Ventilationsmodul nach Anspruch 3, wobei die Außen- und Umlufteintritte Formen aufweisen, die jenen der Klappe angepasst sind, damit ihr Verschluss durch Letztere dicht ist, die Drehachse (V'V) der Klappe durch die Öffnung(en) (Ω1,Ω2) des Spiralgehäuses (15) hindurchführt.

5. Ventilationsmodul nach Anspruch 4, wobei das Gehäuse (20) und die Klappe (27) eine konische Form in einem so genannten oberen Teil, gegenüber dem Austrittsbereich der MV-Gruppe, und einen unteren zylindrischen Teil auf der Seite des Austrittbereichs aufweisen, wobei beide Teile des Gehäuses durch Lösevorrichtungen von einander trennbar sind.

6. Ventilationsmodul nach Anspruch 5, wobei das Gehäuse, das abnehmbare Teile (31a,31b) aufweist, das Spiralgehäuse und die Klappe der seitlichen Flanken (30), die Abmessungen der zentralen Öffnung (35) des hinteren Spiralgehäusegangs, der Unterschied (H) der Abmessungen zwischen den Flanken des Spiralgehäuses und der Klappe sowie der Unterschied der Abmessungen zwischen der sich auf der gegenüberliegenden Seite der Klappe (17) befindlichen Zusammenführung (34) der beiden Teile des Gehäuses und dem Boden der Klappe, sobald der untere Teil des Gehäuses abgenommen wird und die Klappe entlang ihrer Achse, die sich mit der Achse (Z'Z) der Turbine überdeckt, verschoben wird, eingestellt werden, um einen Austrittsbereich (36) für die Montage/Demontage der MV-Gruppe zu schaffen.

7. Ventilationsmodul nach Anspruch 6, wobei sich die Zusammenführung (44) der beiden Teile (41a, 41b) des Gehäuses, welche sich der Klappe (17) gegenüber befindet, exakt über dem Spiralgehäuse eingestellt wird, um den Teil des Spiralgehäuses (48) und die MV-Gruppe mittels Translation (F3,F4) durch die Öffnung (H') herausnehmen zu können, die nach Abnehmen des unteren Gehäuseteils (41b) entsteht.

8. Ventilationsmodul nach Anspruch 4, wobei die gewölbte Form der Klappe (57) und/oder ein Vorsprung (A) des Gehäuses (50') einen Klappenbereich (59) bilden und/oder eine prismatische Form der Klappe (58), einen Demontagebereich durch die Drehung der Klappe um eine Parallelachse (T'T) zur Drehachse des Luftgebläses bilden, die sich in der Nähe eines Lagersitzbereichs (51) befinden.

9. Ventilationsmodul nach Anspruch 4, wobei die Klappe aus zwei demontierbaren Teilen (67a,67b), einem oberen, zumindest teilweise konisch zulaufendem Teil, das dem Austrittsbereichs gegenüberliegend angebracht ist, und einem unterem Teil auf der Seite des Austrittsbereichs, wobei der untere Teil abgebaut ist, um Platz für die Demontage der MV-Gruppe zu schaffen.

10. Ventilationsmodul nach einem der Ansprüche 1 bis 4, in dem eine Platine (7), die an einer Öffnung (O) anliegt, die in der Struktur (100) des Fahrzeugs ausgeführt wird, für die Montage des Gehäuses des Spiralgebläses (77) vorgesehen ist, das die MV-Gruppe (71) und die Klappe (72) aufnimmt.

11. Ventilationsmodul nach Anspruch 10, wobei das Gehäuse des Spiralgebläses (77) durch Tragarme (79) montiert ist, die MV-Gruppe (71) mit einer abnehmbaren Schelle (74) am Gehäuse des Spiralgebläses (77) befestigt ist, und die Klappe durch Drehachsen (78) montiert ist.

12. Ventilationsmodul nach Anspruch 11, wobei die Betätigungsmittel einen Mikromotor als Antrieb (90) beinhalten, der in der Mitte des Gehäuses des Spiralgebläses (77) befestigt wird, in dem die zwei symmetrisch angeordneten Luftgebläse (73a,73b) aufgenommen sind.

13. Ventilationsmodul nach Anspruch 12, wobei der Mikromotor (90) die Klappe (72) mit Hilfe eines Zahnrad-Zentralantriebs (75) antreibt, der durch eine Rolle (76) verlängert ist, die in einer Rille (91) geführt wird, die in der Klappe (72) ausgebildet ist.
